# EUROPÄISCHE PATENTSCHRIFT

(11) **EP 0 736 407 B1**
(45) Veröffentlichungstag und Bekanntmachung des Hinweises auf die Patenterteilung: **13.09.2000**
(21) Anmeldenummer: 96104937.6
(22) Anmeldetag: 28.03.1996
(51) Int. Cl.: B60K 17/28

(54) **Antriebseinheit, Verfahren zu deren Steuerung und Verwendung derselben**
Propulsion unit, its control method and use thereof
Unité de propulsion, procédé pour sa commande et son utilisation

(30) Priorität: 05.04.1995 DE 19512637
(43) Veröffentlichungstag der Anmeldung: 09.10.1996
(73) Patentinhaber: CLAAS KGaA, 33428 Harsewinkel (DE)
(72) Erfinder: Fredriksen, Nils, 33428 Harsewinkel (DE); Brockschmidt, Detlev, 33428 Harsewinkel (DE)
(74) Vertreter: Weeg, Thomas

(56) Entgegenhaltungen:
- EP-A- 0 497 293
- DE-A- 3 713 799
- FR-A- 2 254 472
- US-A- 3 903 738
- US-A- 3 927 528

## Beschreibung

Die Erfindung betrifft eine Antriebseinheit mit einem Antriebsmotor, einem Getriebe und einem Nebenabtrieb mit Zapfwelle, bei der die Leistung des Antriebsmotors zu einem ersten Anteil auf das Getriebe und zu einem zweiten Anteil auf die Zapfwelle verteilt wird.

Die Erfindung betrifft weiterhin ein Verfahren zum Steuern einer derartigen Antriebseinheit.

Die Erfindung betrifft schließlich noch eine Verwendung einer solchen Antriebseinheit.

Antriebseinheiten, Verfahren zu deren Steuerung sowie deren Verwendung im vorstehend genannten Sinne sind jeweils bekannt. Bei landwirtschaftlichen Fahrzeugen, bspw. Traktoren, ist es bekannt, neben dem eigentlichen Antrieb der Räder des Fahrzeuges eine sogenannte Zapfwelle vorzusehen. Hierunter versteht man einen Wellenstummel am Fahrzeug zum direkten Antrieb von Geräten, bspw. über aufgesteckte Gelenkwellen. Der Wellenstummel ist dabei üblicherweise am Heck oder an der Frontseite des Traktors angeordnet.

Üblicherweise wird die Zapfwelle als sogenannte Motor-Zapfwelle betrieben. Bei dieser Ausführungsform wird die Zapfwelle unmittelbar vom Traktormotor angetrieben, und zwar in der Regel über eine schaltbare Zapfwellenkupplung sowie gegebenenfalls ein eigenes Zapfwellengetriebe.

Bei einigen Ausführungsformen, den sogenannten Wege-Zapfwellen, wird die Zapfwellenleistung am Ausgang des Fahrzeuggetriebes, also bspw. an der Kegelritzelwelle im Eingang der Hinterachse abgenommen. In diesem Fall ist die Zapfwellendrehzahl proportional zur Fahrgeschwindigkeit.

Zapfwellen sind in Deutschland nach DIN 9611 genormt.

Über Zapfwellen angetriebene Zusatzgeräte, insbesondere landwirtschaftliche Geräte, gewinnen laufend an Bedeutung, da die direkte Leistungsübertragung vom Traktormotor über die Zapfwelle auf das Zusatzgerät einen deutlich höheren Wirkungsgrad hat als die indirekte Leistungsübertragung durch Traktion des Gerätes.

Aus diesem Grunde werden immer größere Motorleistungen in Traktoren benötigt, um zum einen den Leistungsbedarf des Antriebes und zum anderen den Leistungsbedarf des Nebenabtriebes mit Zapfwelle zu befriedigen.

Andererseits dürfen die Fahrzeuggetriebe in derartigen Fahrzeugen bauartbedingt jeweils nur mit einer bestimmten maximalen Eingangsleistung betrieben werden, um Beschädigungen des Getriebes zu vermeiden. Wenn nun der Traktormotor bewußt mit einer deutlich höheren Leistung ausgelegt wird, bspw. mit 300 kW installierter Dieselmotorleistung, die unter Umständen vollständig über die Zapfwelle fließen sollen, der Fahrantrieb hingegen eine maximal zulässige Leistung von 125 kW übertragen darf, so besteht das Risiko, daß von den 300 kW Dieselmotorleistung ein zu hoher Leistungsanteil auf das Fahrzeuggetriebe übertragen wird.

Nutzfahrzeuge der hier interessierenden Art haben üblicherweise eine Vielzahl von Vorwärts- und Rückwärtsgängen, bspw. acht Vorwärtsgänge und acht Rückwärtsgänge. In den unteren Gängen, bspw. im ersten bis zum dritten Gang, kann es zu einer Überlastung des Getriebes nicht kommen, weil in den unteren Gängen die Räder bei zu hoher Leistung durchdrehen und sich damit von selbst eine Begrenzung des über das Getriebe übertragenen Leistungsanteils ergibt. In den höheren Gängen, die oberhalb der sogenannten Rutschgrenze liegen, drehen die Räder jedoch nicht durch, so daß die gesamte Eingangsleistung des Getriebes über das Getriebe übertragen wird, unabhängig davon, ob ein maximal zulässiger Wert der Getriebeeingangsleistung überschritten wird.

Bei Nutzfahrzeugen der hier interessierenden Art werden neuerdings hydrostatisch-mechanische Getriebe eingesetzt, bspw. leistungsverzweigte Stellkoppelgetriebe. Diese Getriebeart umfaßt eine Leistungsverzweigung zwischen einem Hydrostatgetriebe einerseits und einem Umlaufrädergetriebe andererseits. Mit derartigen Getriebetypen ist es möglich, bspw. jeweils acht Fahrbereiche in Vorwärts- und Rückwärtsrichtung stufenlos und ohne Zugkraftunterbrechung zu durchfahren.

Im Hydrostatgetriebe werden dabei dann, wenn die Getriebeleistung konstant gehalten wird, in jedem Fahrbereich Druckverläufe durchfahren, die die Gestalt einer Hyperbel haben.

Bei einem handelsüblichen Getriebe dieser Art beträgt der Hochdruck im Hydrostatgetriebe bspw. im Anfang eines Fahrbereiches 330 bar, in der Mitte 248 bar und am Ende 198 bar, wobei sich diese Werte z.B. auf eine vom Getriebe übertragene Leistung von 125 kW beziehen.

Der Erfindung liegt die Aufgabe zugrunde, eine Antriebseinheit und ein Verfahren der eingangs genannten Art dahingehend weiterzubilden, daß das Getriebe gegenüber zu hohen Eingangsleistungen geschützt wird. Hierdurch soll es möglich werden, in der Antriebseinheit einen Antriebsmotor mit nahezu beliebig hoher Leistung installieren zu können, um den Nebenabtrieb mit hohen Leistungsanteilen versorgen zu können, wobei jedoch andererseits sichergestellt werden soll, daß der jeweils auf das Getriebe entfallende Leistungsanteil unterhalb eines durch die Getriebeauslegung vorgegebenen Maximalwertes liegt.

Bei einer Antriebseinheit der eingangs genannten Art wird diese Aufgabe erfindungsgemäß dadurch gelöst, daß Meßeinheiten zum Erfassen mindestens eines der Leistungsanteile und zum Erzeugen eines entsprechenden Leistungsanteilsignales sowie Mittel zum Begrenzen des auf das Getriebe entfallenden Leistungsanteils auf einen vorgegebenen Grenzwert in Abhängigkeit von dem Leistungsanteilsignal vorgesehen sind.

Bei einem Verfahren der eingangs genannten Art wird die der Erfindung zugrundeliegende Aufgabe durch die folgenden Verfahrensschritte gelöst:
- Erfassen mindestens eines der Leistungsanteile, durch Mittel zum Erzeugen eines Leistungsanteilsignales; und
- Begrenzen des auf das Getriebe entfallenden Leistungsanteils auf einen vorgegebenen Grenzwert in Abhängigkeit von dem Leistungsanteilsignal.

Schließlich wird die der Erfindung zugrundeliegende Aufgabe noch durch die Verwendung einer Antriebseinheit der vorstehend genannten Art in einem Nutzfahrzeug, insbesondere einem land- oder forstwirtschaftlichen Fahrzeug, einer Baumaschine, einem Kommunalfahrzeug oder einem sonstigen Nutzfahrzeug mit großen Nebenabtriebsleistungsanteilen gelöst.

Die der Erfindung zugrundeliegende Aufgabe wird auf diese Weise vollkommen gelöst. Die Erfindung ermöglicht es nämlich erstmals, bei der Dimensionierung der zu installierenden Motorleistung keine Rücksicht mehr auf die maximal zulässige Eingangsleistung des Getriebes nehmen zu müssen. Vielmehr kann eine nahezu beliebig hohe Motorleistung installiert werden. Auf diese Weise können Zusatzaggregate über den Nebenabtrieb betrieben werden, deren Leistungsaufnahme weit höher ist als dies bei bekannten Antriebseinheiten der Fall ist. Da Zapfwellenantriebe in zunehmendem Maße an Bedeutung gewinnen, da man aus Kostengründen anstrebt, soviel Zusatzgeräte wie möglich mit einer Antriebseinheit, bspw. auf einem Traktor, betreiben zu können, hat dies auch gewichtige wirtschaftliche Auswirkungen. Man kann daher unter Einsatz der Erfindung die Zusatzgeräte mit sehr hoher und konstanter Leistung betreiben, ohne irgendeine Rücksicht auf den jeweiligen Fahrbetrieb nehmen zu müssen. Im Gegensatz zu herkömmlichen Antriebseinheiten, bei denen die Nebenabtriebsleistung durch die installierte Motorleistung begrenzt war, können daher unter Einsatz der Erfindung auch bei hoher Leistungsaufnahme des Fahrzeugantriebes die an den Nebenabtrieb angeschlossenen Zusatzgeräte mit voller Leistung arbeiten.

Bei einer ersten Gruppe von Ausführungsbeispielen der Erfindung ("Drucklösung") ist das Getriebe mindestens teilweise als Hydrostatgetriebe ausgebildet. Die Meßeinheiten umfassen einen Drucksensor für den Hochdruck im Hydrostatgetriebe sowie Mittel zum Erfassen des Übersetzungsverhältnisses des Getriebes.

Diese Maßnahme hat den Vorteil, daß eine Druckmessung in einem Hydrostatgetriebe relativ einfach und billig darzustellen ist. Darüber hinaus ist von Vorteil, daß das Druckmeßsignal auch zur Optimierung der Schaltvorgänge im Getriebe verwendet werden kann. Diese "Drucklösung" ist besonders einfach zu realisieren und kann direkt im Getriebe für eine Leistungsbegrenzung eingesetzt werden.

Besonders bevorzugt ist jedoch für den Fall, daß das Getriebe mindestens teilweise als Hydrostatgetriebe ausgebildet ist, wenn die Begrenzungsmittel ein Stellglied für das Übersetzungsverhältnis des Hydrostatgetriebes umfassen. Dann kann durch Einstellen des Übersetzungsverhältnisses des Hydrostatgetriebes der auf das Getriebe entfallende Leistungsanteil eingestellt bzw. begrenzt werden.

Diese Maßnahme hat den Vorteil, daß wirklich nur der auf das Getriebe entfallende Anteil der Gesamtleistung der Antriebseinheit begrenzt wird. Der nicht auf das Getriebe entfallende Leistungsanteil kann somit voll über den Nebenabtrieb und die Zapfwelle abgenommen werden.

Dies gilt insbesondere dann, wenn das Getriebe als leistungsverzweigtes Stellkoppelgetriebe ausgebildet ist, bei dem das Hydrostatgetriebe beim Durchfahren eines jeden Fahrbereiches für einen vorgegebenen, maximalen Leistungsanteil im Getriebe einen vorgegebenen Druckverlauf des Hochdrucks durchfährt. Dabei umfassen die Begrenzungsmittel vorzugsweise eine Steuerung, die den jeweiligen Hochdruck auf den Wert des vorgegebenen Druckverlaufs begrenzen.

Diese Maßnahme hat den Vorteil, daß bei einem Getriebe der genannten Bauart durch sehr einfache Zusatzmaßnahmen und Eingriffe in die Getriebesteuerung die gewünschte Leistungsbegrenzung im Getriebezweig bewirkt werden kann.

Hierzu ist es lediglich erforderlich, die bereits erwähnten hyperbolischen Druckverläufe in jedem Fahrbereich für eine bestimmte konstante Getriebeleistung, nämlich den gewünschten Grenzwert, als Grenzkurve im Programm der Getriebesteuerung zu legen. Sie kann dort mit Hilfe eines Faktors in y-Richtung verschoben werden. Die Wahl des Faktors berücksichtigt dabei die zulässige Leistung und den Wirkungsgrad.

Durch einfache Druckmessung kann dann ein Überschreiten des vorgegebenen Druckverlaufes erkannt und durch Beeinflussung des Übersetzungsverhältnisses korrigiert werden. Das Fahrzeug fährt damit langsamer, und zwar solange, bis erkannt wird, daß sich der Hochdruck wieder im zulässigen Bereich befindet.

Die Leistungsbestimmung bzw. -begrenzung bei einem handelsüblichen Getriebe dieser Bauart über die Messung des Hochdrucks im Hydrostaten bietet den Vorteil, daß an den vorhandenen Getrieben nur minimale Änderungen vorgenommen werden müssen. Es muß nur ein Hochdrucksensor an geeigneter Stelle im Hydrostaten untergebracht werden. Das Drucksignal des Sensors wird im Steuergerät verarbeitet und zur Getrieberegelung benutzt. Alle Regelvorgänge laufen ausschließlich im Bereich des Getriebes ab und sind durch entsprechende Software-Ergänzungen abgedeckt. Eingriffe im Antriebsmotor sind dabei nicht erforderlich.

Bei einer zweiten Gruppe von Ausführungsbeispielen der Erfindung ("Drehmomentlösung") umfassen die Meßeinheiten einen Drehzahlgeber sowie einen Drehmomentgeber an einer einen der Leistungsanteile übertragenden Welle. Dazu werden die Drehzahl und das Drehmoment an dieser Welle gemessen.

Diese Maßnahme hat den Vorteil, daß der Leistungsanteil in besonders einfacher Weise aus der Drehzahl und dem Drehmoment berechnet werden kann, indem an sich bekannte Sensorsysteme eingesetzt werden. Dabei kann im allgemeinen bereits auf Sensoren, insbesondere Drehzahlsensoren, zurückgegriffen werden, die sich ohnehin bereits in der Antriebseinheit für herkömmliche Antriebs- und Getriebesteuerungen befinden. Durch einfache Produktbildung der Werte von Drehmoment und Drehzahl ergibt sich dann der über die betreffende Welle übertragene Leistungsanteil. Diese "Drehmomentlösung" benötigt einen Eingriff in die elektronische Regelung des Antriebsmotors.

In bevorzugter Weiterbildung dieses Ausführungsbeispiels ist die Welle die Zapfwelle.

Diese Maßnahme hat den Vorteil, daß mit der Zapfwelle ein üblicherweise leicht zugängliches Element zur Verfügung steht, weil die Zapfwelle entweder vom Motorausgang parallel zum Getriebe angeordnet ist oder am Getriebeeingang ausgekoppelt wird und das Getriebe parallel zu den Übersetzungen durchsetzt. Man kann daher in konstruktiv einfacher Weise an der Zapfwelle z.B. einen Inkrementgeber, insbesondere eine Zahnscheibe oder dergleichen sowie einen Drehmomentgeber anbringen.

Die Erfassung des übertragenen Leistungsanteils über eine Drehmomenten- und Drehzahlmessung hat darüber hinaus noch einen sicherheitstechnischen Vorteil. Fällt nämlich das zugehörige Signal aus, so bedeutet dies für die Antriebssteuerung, daß keine Zapfwellenleistung abgegeben wird und somit der Antriebsmotor nur noch gedrosselt läuft. Dies hat gegenüber anderen Arten der Meßdatenerfassung den Vorteil, daß keine falschen Signale anfallen, die einen entlasteten Fahrantrieb vortäuschen und dann die volle Motorleistung freigeben, mit der Folge, daß das Getriebe überlastet oder gar zerstört wird.

Bei einer dritten Gruppe von Ausführungsbeispielen der Erfindung ("Kraftlösung") umfassen die Meßeinheiten einen Kraftgeber zum Erfassen des Reaktionsmomentes des Getriebes auf ein raumfestes Chassis sowie Mittel zum Erfassen des Übersetzungsverhältnisses des Getriebes. Auf diese Weise werden das Reaktionsmoment und das Übersetzungsverhältnis gemessen und anschließend ausgewertet.

Diese Maßnahme hat den Vorteil, daß z.B. mittels einer Kraftmeßdose das Reaktionsmoment des Getriebegehäuses auf den Rahmen erfaßt und über die Zuordnung zum jeweiligen Übersetzungsverhältnis die Getriebeeingangsleistung berechnet werden kann.

Bei einer bevorzugten Variante der Erfindung wird mittels eines Leistungsreglers des Antriebsmotors dessen Ausgangsleistung begrenzt.

Als Leistungsregler kommt dabei z.B. eine Einspritzpumpe, insbesondere eine Dieseleinspritzpumpe mit elektronischer Regelung in Betracht.

Weitere Vorteile ergeben sich aus der Beschreibung und der beigefügten Zeichnung.

Es versteht sich, daß die vorstehend genannten und die nachstehend noch zu erläuternden Maßnahmen nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: ein schematisiertes Blockschaltbild eines ersten Ausführungsbeispiels einer erfindungsgemäßen Antriebseinheit mit einer "Drucklösung";
- Fig. 2: ein schematisiertes Blockschaltbild, ähnlich Fig. 1, eines zweiten Ausführungsbeispiels einer erfindungsgemäßen Antriebseinheit mit einer "Drehmomentlösung";
- Fig. 3: ein schematisiertes Blockschaltbild, ähnlich Fig. 1, eines dritten Ausführungsbeispiels einer erfindungsgemäßen Antriebseinheit mit einer "Kraftlösung";
- Fig. 4: ein Diagramm zur Erläuterung der Wirkungsweise der Antriebseinheiten gemäß den Fig. 1 bis 3;
- Fig. 5: ein Diagramm für die Dieselmotorleistung der Antriebseinheit in Abhängigkeit von der Zapfwellenleistung.

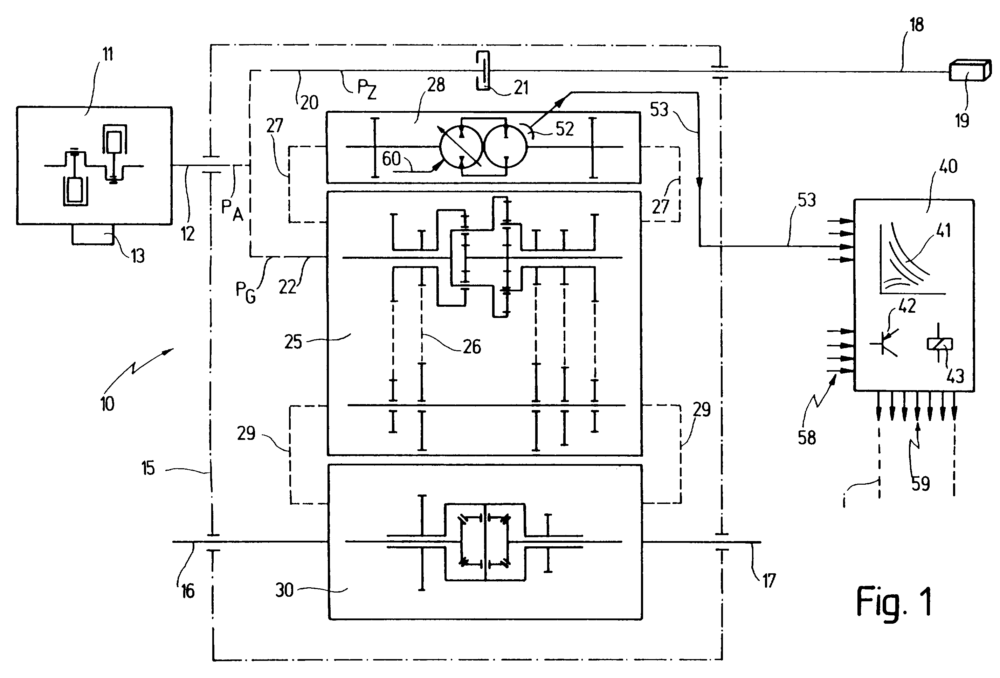

In Fig. 1 bezeichnet 10 insgesamt eine Antriebseinheit, wie sie vorzugsweise zum Antrieb von landwirtschaftlichen Nutzfahrzeugen, aber auch zum Antrieb von Kommunalfahrzeugen, Straßenbaufahrzeugen, Omnibussen, Lastwagen usw. eingesetzt werden kann.

Die Antriebseinheit 10 umfaßt einen Antriebsmotor 11, vorzugsweise einen Dieselmotor. Der Antriebsmotor 11 hat bspw. eine maximale Ausgangsleistung von 300 kW.

Der Antriebsmotor 11 umfaßt eine Motorwelle 12. Er wird über eine Einspritzpumpe, vorzugsweise eine Dieseleinspritzpumpe 13, betrieben.

Die Motorwelle 12 arbeitet auf ein insgesamt mit 15 bezeichnetes, leistungsverzweigtes Stellkoppelgetriebe. Stellkoppelgetriebe dieser Art sind bekannt, bspw. aus der EP-B1 0 081 696, der EP-A2 0 195 452, der DE-A1 41 25 988 und der DE-A1 41 31 572.

Am Ausgang des Stellkoppelgetriebes 15 sind eine Hinterachse 17 sowie eine Vorderachse 16 angedeutet. Ferner ist eine Zapfwelle 18 als Nebenabtrieb vorgesehen. Die Zapfwelle 18 umfaßt einen Zapfwellenstummel 19 zum Anschluß von Zusatzgeräten. Die Zapfwelle 18 ist im wesentlichen als Durchgangswelle 20 im Stellkoppelgetriebe 15 ausgebildet. In die Durchgangswelle 20 ist eine Zapfwellenkupplung 21 eingeschaltet, um den Nebenabtrieb ein- und ausschalten zu können.

Die an der Motorwelle 12 anliegende Motorleistung P_{A} verzweigt sich im Getriebe 15, wie mit gestrichelten Linien angedeutet, in einen Leistungsanteil P_{Z} für die Zapfwelle 18 und einen Leistungsanteil P_{G} für eine Getriebeingangswelle 22.

Die Getriebeeingangswelle 22 arbeitet auf ein Umlauf/Stirnradgetriebe 25, bei dem ein Umlaufgetriebe mit einem Stirnradgetriebe zusammenwirkt, wie mit gestrichelten Linien 26 angedeutet. Über Verbindungen 27 arbeitet das Umlauf/Stirnradgetriebe 25 mit einem Hydrostatgetriebe 28 zusammen. Über weitere Verbindungen 29 wird die Ausgangsleistung über ein Differenzialgetriebe 30 an die Hinterachse 17 und die Vorderachse 16 abgegeben.

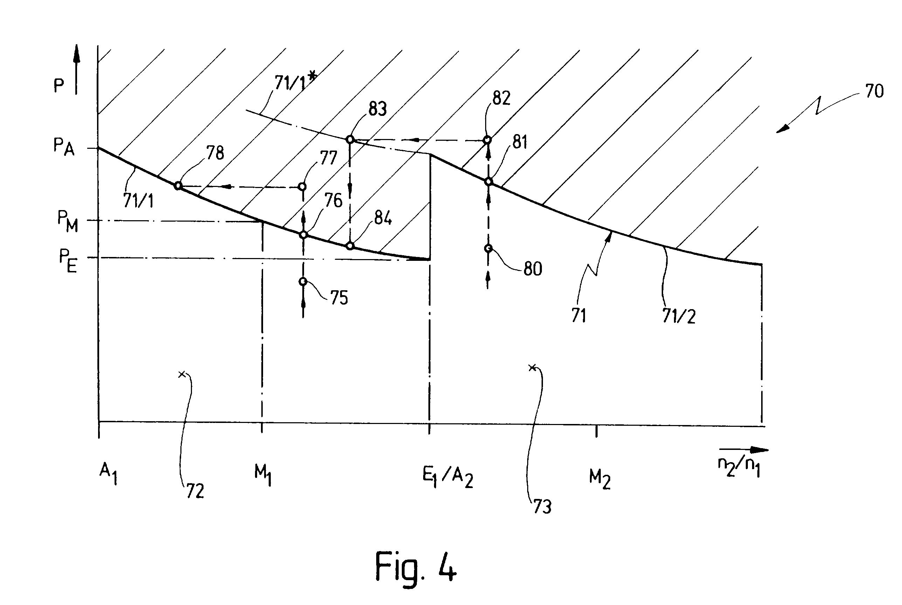

Die Wirkungsweise eines derartigen leistungsverzweigten Stellkoppelgetriebes ist im Detail in den oben aufgelisteten Dokumenten beschrieben. Im vorliegenden Zusammenhang bleibt insoweit festzuhalten, daß es ein derartiges Getriebe gestattet, bei im wesentlichen konstanter Drehzahl des Antriebsmotors 11 im Leistungsoptimum oder Verbrauchsminimum, stufenlos eine Vielzahl von Fahrbereichen, jeweils in Vorwärts- und Rückwärtsrichtung zu durchfahren, und zwar ohne Zugkraftunterbrechung. Die Leistung wird dabei auf das Hydrostatgetriebe 28 und das Umlauf/Stirnradgetriebe 25 verteilt. Das Hydrostatgetriebe 28 wird in jedem Fahrbereich von einem Druckmaximum entlang einer hyperbolischen Kurve herunter zu einem Druckminimum gefahren, wie weiter unten zu Fig. 4 noch erläutert werden wird.

Eine Getriebesteuerung 40 dient zur Steuerung des Getriebes 15.

In der Getriebesteuerung 40 sind verschiedene Kennfelder 41 abgespeichert und es werden elektronische Einheiten 42 sowie fluiddynamische Einheiten, bspw. Magnetventile 43, betätigt, um die Elemente des Getriebes 15 zu beeinflussen.

Gemäß der in Fig. 1 dargestellten "Drucklösung" ist im Hydrostatgetriebe 28 ein Druckgeber 52 vorgesehen, um den Hochdruck p im Hydrostatgetriebe 28 zu erfassen. Ein entsprechender Druckmeßwert wird über eine erste Signalleitung 53 an die Getriebesteuerung 40 übertragen.

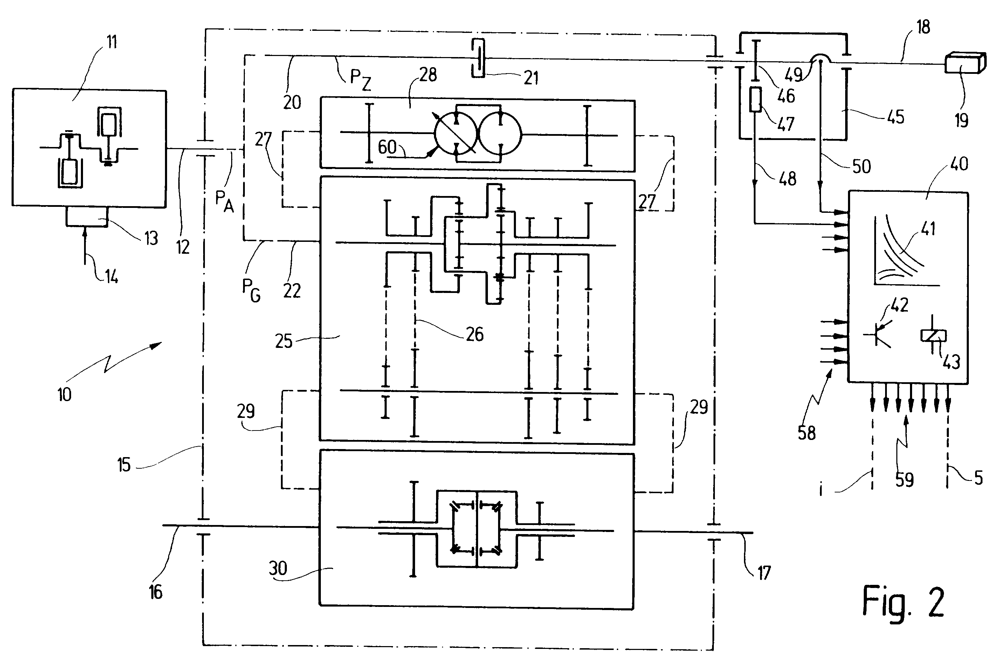

Gemäß dem in Fig. 2 dargestellten zweiten Ausführungsbeispiel "Drehmomentlösung" ist eine Meßvorrichtung 45 an der Zapfwelle 18 angebracht. Die Meßvorrichtung 45 umfaßt einen Inkrementgeber 46, bspw. eine mit der Zapfwelle 18 rotierende Zahnscheibe oder dergleichen. Dem Inkrementgeber 46 ist ein Sensor 47 zugeordnet. Auf diese Weise kann die Drehzahl der Zapfwelle 18 erfaßt werden. Eine erste Signalleitung 48 überträgt das Drehzahlsignal zur Getriebesteuerung 40.

Die Meßvorrichtung 45 umfaßt ferner einen Drehmomentgeber 49. Der Drehmomentgeber 49 liefert ein dem übertragenen Drehmoment auf der Zapfwelle 18 entsprechendes Signal und überträgt dieses mittels einer zweiten Signalleitung 50 zur Getriebesteuerung 40.

Über eine dritte Signalleitung 14 kann in die Regelung der Dieseleinspritzpumpe 13 eingegriffen werden.

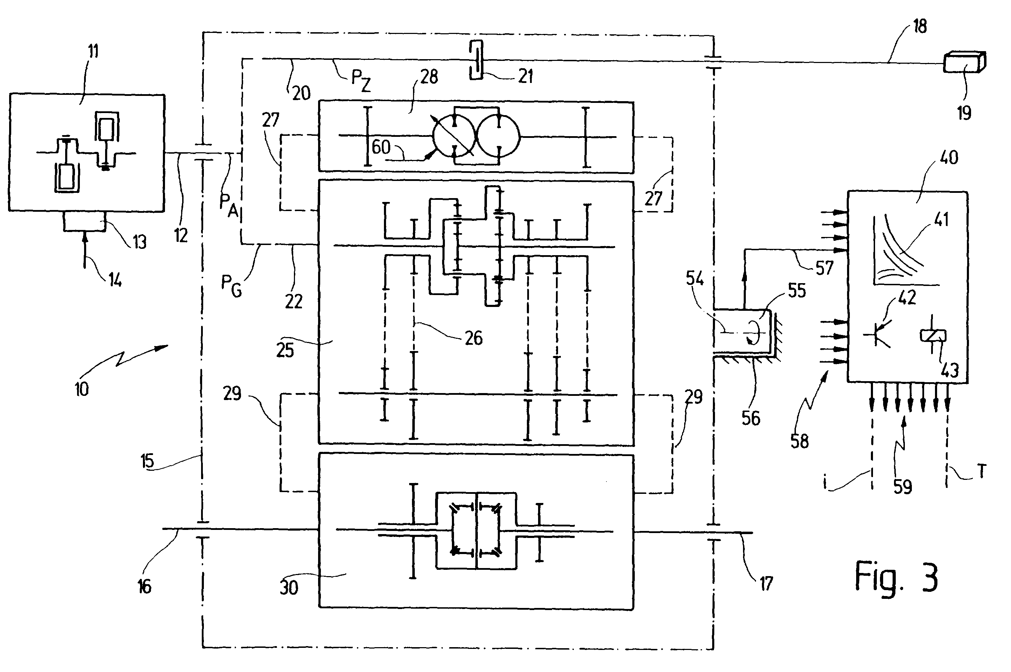

Das Getriebe 15 hat eine mit 54 symbolisierte Getriebeachse. Gemäß der in Fig. 3 dargestellten zweiten Variante einer "Drehmomentlösung" kann mittels eines Kraftgebers 55, bspw. einer Kraftmeßdose, das Stützmoment des Getriebes 15 relativ zu einem raumfesten Chassis 56 oder Rahmen erfaßt werden. Ein dem Stützmoment entsprechendes Signal wird über eine vierte Signalleitung 57 an die Getriebesteuerung 40 übertragen.

Mit 58 sind weitere Signalleitungen 58 bezeichnet, über die weitere geeignete Meßsignale zur Getriebesteuerung 40 übertragen werden können.

In entsprechender Weise sind mehrere Ausgangsleitungen 59 an der Getriebesteuerung 40 vorgesehen, um Steuersignale der Elektronik 42 oder der Magnetventile 43 an die entsprechenden Aggregate der Antriebseinheit 10 zu übermitteln. So kann bspw. das Übersetzungsverhältnis i des Getriebes 15 oder des Hydrostatgetriebes 28 eingestellt werden. Aber auch eine Beeinflussung des Antriebsmotors 11 ist möglich, indem z.B. die zeitliche Länge T der Einspritzimpulse in der Dieseleinspritzpumpe 13 und damit die Ausgangsleistung des Antriebsmotors 11 eingestellt werden.

Durch die vorstehend beschriebenen Meßelemente können die Leistungsanteile P_{Z} und P_{G} auf der Zapfwelle 18 bzw. der Getriebeeingangswelle 22 in Gestalt von Leistungsanteilsignalen erfaßt werden. Eine solche Erfassung ist z.B. dadurch möglich, indem das Drehzahlsignal und das Drehmomentsignal auf den Leitungen 48, 50 miteinander multipliziert werden. Man erhält auf diese Weise die über die Zapfwelle 18 übertragene Leistung P_{Z}. Wenn die Antriebsleistung P_{A} des Antriebsmotors 11 bekannt ist, kann daraus durch Differenzbildung der auf das Getriebe 15 entfallende Leistungsanteil P_{G} ermittelt werden.

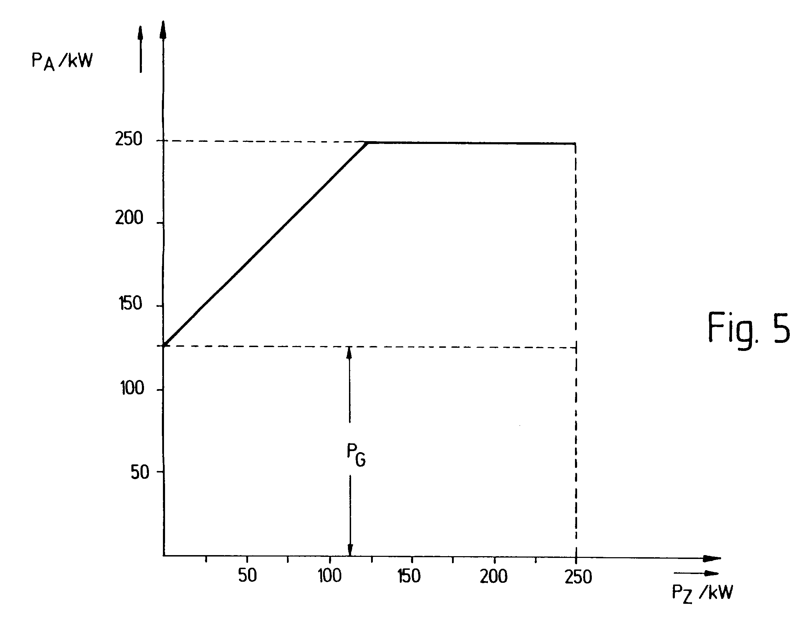

In Fig. 5 ist die Antriebsleistung P_{A} über der Zapfwellenleistung P_{Z} für ein Ausführungsbeispiel der Erfindung dargestellt, bei dem die maximale Antriebsleistung P_{A} 250 kW, die maximal zulässige Leistung im Fahrantrieb hingegen 125 kW beträgt.

Wie man erkennt, steigt im Diagramm die Zapfwellenleistung von 125 kW linear auf den Endwert von 250 kW und bleibt dort bis zum maximal an der Zapfwelle abnehmbaren Wert von 250 kW stehen. Der Anteil des Fahrantriebes ist mittels eines Doppelpfeils als P_{G} eingezeichnet. Aus Fig. 5 ist erkennbar, daß in Abhängigkeit von Fahrantrieb- und Zapfwellenleistung das Getriebe und/oder der Dieselmotor gesteuert werden muß. Solange der Fahrantrieb nicht voll ausgenutzt ist, darf der Dieselmotor eine höhere Leistung abgeben, die dann für Zapfwellenarbeiten zur Verfügung steht.

Entsprechende Berechnungen sind über den Hochdruck p in Verbindung mit dem Übersetzungsverhältnis i usw. möglich.

Wenn auf diese Weise bekannt ist, welcher Leistungsanteil P_{G} auf das Getriebe 15 entfällt, können Maßnahmen ergriffen werden, um eine Überlastung des Getriebes 15 in Abhängigkeit von den Leistungsanteilsignalen zu verhindern.

Wenn bspw., wie erwähnt, der Antriebsmotor 11 eine maximale Ausgangsleistung von 300 kW hat, andererseits aber das Getriebe 15 nur für eine Leistung von 125 kW ausgelegt ist, während die verbleibenden 175 kW über die Zapfwelle 18 übertragen werden sollen, muß sichergestellt werden, daß von den 300 kW Dieselmotorleistung nicht mehr als die erwähnten 125 kW als Leistungsanteil P_{G} auf das Getriebe 15 übertragen werden.

Wird nun durch die beschriebene Signalauswertung in der Getriebesteuerung 40 festgestellt, daß der Grenzwert für P_{G} in Höhe von 125 kW überschritten wird, so müssen entsprechende Maßnahmen ergriffen werden. Diese Maßnahmen können zum einen darin bestehen, auf den Antriebsmotor 11 einzuwirken oder aber die Leistungsaufnahme des Getriebes 15 selbst zu verringern. Diese Sicherheitsmaßnahmen können bei bestimmten Getriebebauarten auf die höhere Gänge bzw. Fahrbereiche beschränkt werden, weil in den niedrigeren Gängen und Fahrbereichen eine selbsttätige Leistungsbegrenzung im Getriebe 15 dadurch stattfindet, daß die Antriebsräder durchdrehen, weil in diesen niedriger übersetzten Gängen bzw. Fahrbereichen die Antriebsräder nicht in der Lage sind, eine entsprechende Leistung auf den Untergrund zu übertragen.

Fig. 4 veranschaulicht eine besonders bevorzugte Vorgehensweise zur Begrenzung des auf das Getriebe 15 entfallenden Leistungsanteils P_{G} über eine Überwachung und Einstellung des Hochdrucks p im Hydrostatgetriebe 28.

Fig. 4 zeigt hierzu in einem Diagramm 70 einen Druckverlauf 71 für den Hochdruck p über dem Drehzahlverhältnis n₂/n₁ am Ausgang bzw. Eingang des Hydrostatgetriebes 28. Das Diagramm 70 zeigt dabei zwei Fahrbereiche 72 und 73 von mehreren derartigen Fahrbereichen.

Man erkennt, daß der Druckverlauf 71 in den beiden Fahrbereichen 72, 73 übereinstimmend ist, wie mit 71/1 im Fahrbereich 72 und mit 71/2 im Fahrbereich 73 angedeutet. Der Druckverlauf 71 verläuft jeweils entlang von hyperbolischen Kurven, ausgehend von einem hohen Anfangsdruck p_{A} im Anfang A₁ bzw. A₂ eines Fahrbereiches 72 bzw. 73 über einen Mitteldruck p_{M} in der Mitte M₁ bzw. M₂ bis zu einem Enddruck p_{E} am Ende E₁ der Fahrbereiche 72 bzw. 73.

Bei dem bereits erwähnten Beispiel eines handelsüblichen Getriebes mit 125 kW maximal übertragbarer Leistung P_{G} ist bspw. p_{A} = 330 bar, p_{M} = 248 bar und p_{E} = 198 bar.

Betrachtet man nun den im ersten Fahrbereich 72 dargestellten Beispielsfall, so ergibt sich folgendes:

Das Getriebe werde zunächst in einem Arbeitspunkt 75 unterhalb des Druckverlaufes 71/1 betrieben. Der gemessene Hochdruck p ist damit niedriger als der zulässige Hochdruck. Spezielle Maßnahmen, wie sie im Rahmen der vorliegenden Erfindung angestrebt werden, sind daher nicht zu ergreifen.

Wenn sich nun durch Vergrößern der Last der Hochdruck p erhöht, so verschiebt sich der Arbeitspunkt über 76 nach 77 und überschreitet dabei den Druckverlauf 71/1. Der gemessene Hochdruck ist damit höher als der zulässige Hochdruck. Die Getriebesteuerung 40 ändert nun unabhängig von der Stellung des Fahrhebels das Übersetzungsverhältnis i im Getriebe 15, mit der Folge, daß die Antriebseinheit 10 bzw. das angetriebene Fahrzeug langsamer wird. Wenn das Fahrzeug so langsam geworden ist, daß sich der Hochdruck p im Arbeitspunkt 78 wieder im zulässigen Bereich befindet, wird die Regelung deaktiviert. Wenn der Hochdruck p nun weiter absinkt, kann das Fahrzeug entsprechend der vorgegebenen Fahrhebelstellung wieder schneller werden.

Der mit den Arbeitspunkten 75 bis 78 in Fig. 4 veranschaulichte Vorgang konnte hinsichtlich der Regelung auf eine Verminderung der Fahrgeschwindigkeit über das Übersetzungsverhältnis bei konstantem Hochdruck p zurückgreifen, entsprechend dem Verlauf zwischen den Arbeitspunkten 77 und 78, bis bei 78 der Druckverlauf 71/1 wieder unterschritten wurde.

Tritt nun eine solche Situation im Anfangsbereich eines Fahrbereiches auf, so sind zusätzliche Vorkehrungen erforderlich. Dies ist in der rechten Hälfte von Fig. 4 im zweiten Arbeitsbereich 73 veranschaulicht.

Auch dort ist zunächst von einem zulässigen Arbeitspunkt 80 auszugehen, der sich infolge Lasterhöhung in einen Arbeitspunkt 81 auf der Linie des Druckverlaufes 71/2 verändert. Die nun wieder eingreifende Regelung bewirkt nach Erreichen des Arbeitspunktes 82 oberhalb des Grenzwertes 81 wiederum eine Verminderung der Fahrgeschwindigkeit bzw. des Übersetzungsverhältnisses bei konstantem Hochdruck p. Die hier horizontal verlaufende gestrichelte Arbeitslinie würde nun aber den tatsächlich vorhandenen Druckverlauf 71/2 nicht erreichen, weil kurz unterhalb des hier angenommenen Wertes für n₂/n₁ ein Fahrbereichswechsel bei E₁/A₂ stattfindet und dort der Druckverlauf 71/2 in einem Stufensprung nach unten abfällt.

In diesem Fall ist es daher erforderlich, den Druckverlauf 71/2 des zweiten Arbeitsbereiches 73 unter den Anfangspunkt A₂ zu extrapolieren, wie strichpunktiert mit 71/1* in Fig. 4 angegeben. Dies geschieht in der Weise, daß der Verlauf 71/1 im ersten Arbeitsbereich 72 um den Betrag des bei E₁/A₂ auftretenden Stufensprunges in Ordinatenrichtung verschoben wird, um den Verlauf 71/1* zu erhalten. Auf diese Weise findet man auch dort einen theoretischen Arbeitspunkt 83, der dem realen Arbeitspunkt 84 entspricht. In diesem Fall umfaßt die Sicherungsmaßnahme also einen Wechsel des Fahrbereiches.

## Patentansprüche

1. Antriebseinheit mit einem Antriebsmotor (11), einem Getriebe (15) und einem Nebenabtrieb mit Zapfwelle (18), bei der die Leistung (P_{A}) des Antriebsmotors (11) zu einem ersten Anteil (P_{G}) auf das Getriebe (15) und zu einem zweiten Anteil (P_{Z}) auf die Zapfwelle (18) verteilt wird, dadurch gekennzeichnet, daß Meßeinheiten (46, 47, 49, 52, 55) zum Erfassen mindestens eines der Leistungsanteile (P_{G}, P_{Z}) und zum Erzeugen eines entsprechenden Leistungsanteilsignales sowie Mittel (14, 40, 60) zum Begrenzen des auf das Getriebe (15) entfallenden Leistungsanteils (P_{G}) auf einen vorgegebenen Grenzwert in Abhängigkeit von dem Leistungsanteilsignal vorgesehen sind.

2. Antriebseinheit nach Anspruch 1, dadurch gekennzeichnet, daß das Getriebe (15) mindestens teilweise als Hydrostatgetriebe (28) ausgebildet ist, und daß die Meßeinheiten einen Drucksensor (52) für den Hochdruck (p) im Hydrostatgetriebe (28) sowie Mittel zum Erfassen des Übersetzungsverhältnisses (i) des Getriebes (15) umfassen.

3. Antriebseinheit nach Anspruch 1 oder 2, dadurch gekennzeichnet, daß das Getriebe (15) mindestens teilweise als Hydrostatgetriebe (28) ausgebildet ist, und daß die Begrenzungsmittel ein Stellglied (60) für das Übersetzungsverhältnis (i) des Hydrostatgetriebes (28) umfassen.

4. Antriebseinheit nach Anspruch 3, dadurch gekennzeichnet, daß das Getriebe (15) als leistungsverzweigtes Stellkoppelgetriebe ausgebildet ist, bei dem das Hydrostatgetriebe (28) beim Durchfahren eines jeden Fahrbereiches (72, 73) für einen vorgegebenen, maximalen Leistungsanteil (P_{G}) im Getriebe (15) einen vorgegebenen Druckverlauf (71) des Hochdrucks (p) durchfährt, und daß die Begrenzungsmittel eine Steuerung umfassen, die den jeweiligen Hochdruck (p) auf den Wert des vorgegebenen Druckverlaufes (71) begrenzen.

5. Antriebseinheit nach Anspruch 4, dadurch gekennzeichnet, daß beim Überschreiten (76, 81) des vorgebenen Druckverlaufes (71) das Übersetzungsverhältnis (i) im Sinne einer Verminderung der Ausgangsdrehzahl des Getriebes (15) verändert wird, bis der vorgebene Druckverlauf (71) wieder unterschritten (78, 84) wird.

6. Antriebseinheit nach Anspruch 1, dadurch gekennzeichnet, daß die Meßeinheiten einen Drehzahlgeber (46, 47) sowie einen Drehmomentgeber (49) an einer einen der Leistungsanteile (P_{G}, P_{Z}) übertragenden Welle umfassen.

7. Antriebseinheit nach Anspruch 6, dadurch gekennzeichnet, daß die Welle die Zapfwelle (18) ist.

8. Antriebseinheit nach Anspruch 1, dadurch gekennzeichnet, daß die Meßeinheiten einen Kraftgeber (55) zum Erfassen des Reaktionsmomentes des Getriebes (15) auf ein raumfestes Chassis (56) sowie Mittel zum Erfassen des Übersetzungsverhältnisses (i) des Getriebes (15) umfassen.

9. Antriebseinheit nach einem oder mehreren der Ansprüche 6 bis 8, dadurch gekennzeichnet, daß die Begrenzungsmittel einen Leistungsregler des Antriebsmotors (11) umfassen.

10. Antriebseinheit nach Anspruch 9, dadurch gekennzeichnet, daß der Leistungsregler eine Einspritzpumpe (13) umfaßt.

11. Antriebseinheit nach Anspruch 10, dadurch gekennzeichnet, daß die Einspritzpumpe (13) eine Dieseleinspritzpumpe ist.

12. Verwendung einer Antriebseinheit nach einem oder mehreren der Ansprüche 1 bis 11 in einem Nutzfahrzeug, insbesondere einem land- oder forstwirtschaftlichen Fahrzeug, einer Baumaschine, einem Kommunalfahrzeug oder einem sonstigen Nutzfahrzeug mit großen Nebenabtriebsleistungsanteilen.

13. Verfahren zum Steuern einer Antriebseinheit mit einem Antriebsmotor (11), einem Getriebe (15) und einem Nebenabtrieb mit Zapfwelle (18), bei der die Leistung (P_{A}) des Antriebsmotors (11) zu einem ersten Anteil (P_{G}) auf das Getriebe (15) und zu einem zweiten Anteil (P_{Z}) auf die Zapfwelle (18) verteilt wird, gekennzeichnet durch die Verfahrensschritte:
- Erfassen mindestens eines der Leistungsanteile (P_{G}, P_{Z}) durch Mittel (46, 47, 49, 52, 55) zum Erzeugen eines Leistungsanteilsignales; und
- Begrenzen des auf das Getriebe (15) entfallenden Leistungsanteils (P_{G}) auf einen vorgegebenen Grenzwert in Abhängigkeit von dem Leistungsanteilsignal.

14. Verfahren nach Anspruch 13, dadurch gekennzeichnet, daß bei einem mindestens teilweise als Hydrostatgetriebe (28) ausgebildeten Getriebe (15) der Hochdruck (p) im Hydrostatgetriebe (28) sowie das Übersetzungsverhältnis (i) des Getriebes (15) gemessen werden.

15. Verfahren nach Anspruch 13 oder 14, dadurch gekennzeichnet, daß der auf das Getriebe (15) entfallende Leistungsanteil (P_{G}) bei einem mindestens teilweise als Hydrostatgetriebe (28) ausgebildeten Getriebe (15) durch Einstellen des Übersetzungsverhältnisses (i) des Hydrostatgetriebes (28) begrenzt wird.

16. Verfahren nach Anspruch 15, dadurch gekennzeichnet, daß bei einem als leistungsverzweigtes Stellkoppelgetriebe ausgebildeten Getriebe (15), bei dem das Hydrostatgetriebe (28) beim Durchfahren eines jeden Fahrbereiches (72, 73) für einen vorgegebenen, maximalen Leistungsanteil (P_{G}) im Getriebe (15) einen vorgegebenen Druckverlauf (71) des Hochdrucks (p) durchführt, der jeweilige Hochdruck (p) auf den Wert des vorgebenen Druckverlaufes (71) begrenzt wird.

17. Verfahren nach Anspruch 16, dadurch gekennzeichnet, daß beim Überschreiten (76, 81) des vorgebenen Druckverlaufes (71) das Übersetzungsverhältnis (i) im Sinne einer Verminderung der Ausgangsdrehzahl des Getriebes (15) verändert wird, bis der vorgegebene Druckverlauf (71) wieder unterschritten (78, 84) wird.

18. Verfahren nach Anspruch 13, dadurch gekennzeichnet, daß die Drehzahl und das Drehmoment an einer einen der Leistungsanteile (P_{G}, P_{Z}) übertragenden Wellen gemessen werden.

19. Verfahren nach Anspruch 18, dadurch gekennzeichnet, daß die Drehzahl und das Drehmoment an der Zapfwelle (18) gemessen werden.

20. Verfahren nach Anspruch 13, dadurch gekennzeichnet, daß das Reaktionsmoment des Getriebes (15) auf ein raumfestes Chassis (56) sowie das Übersetzungsverhältnis (i) des Getriebes (15) gemessen werden.

21. Verfahren nach einem oder mehreren der Ansprüche 18 bis 20, dadurch gekennzeichnet, daß der auf das Getriebe (15) entfallende Leistungsanteil (P_{G}) durch Leistungsregelung des Antriebsmotors (11) begrenzt wird.

22. Verfahren nach Anspruch 21, dadurch gekennzeichnet, daß der Antriebsmotor (11) durch Beeinflussung einer Einspritzpumpe (13) des Antriebsmotors (11) leistungsgeregelt wird.

## Claims

1. Drive unit with a drive motor (11), a transmission (15) and an auxiliary drive with a power take-off shaft (18), in which the power (P_{A}) of the drive motor (11) is divided into a first share (P_{G}) on the transmission (15) and into a second share (P_{Z}) on the power take-off shaft (18), characterised in that measuring units (46, 47, 49, 52, 55) for sensing at least one of the power shares (P_{G}, P_{Z}) and for generating a corresponding power share signal, and means for limiting the share of the power (P_{g}) occurring on the transmission (15) to a pre-determined limit value dependent upon the power share signal are provided.

2. Drive unit according to claim 1, characterised in that the transmission (15) is at least in part configured as a hydrostatic transmission (28), and that the measuring units include a pressure sensor (52) for high pressure (p) in the hydrostatic transmission (28) and means for sensing the gear ratio (i) of the transmission (15).

3. Drive unit according to claim 1 or 2, characterised in that the transmission (15) is at least in part configured as a hydrostatic transmission (28), and that the limiting means include a controlling member (60) for the gear ratio (i) of the hydrostatic transmission (28).

4. Drive unit according to claim 3, characterised in that the transmission (15) is configured as a split power, adjustable linkage transmission, in which on passing through any driving range (72, 73), the hydrostatic transmission (28) passes through a pre-determined pressure characteristic (71) of high pressure (p) for a pre-determined maximum share of the power (P_{G}) in the transmission (15), and that the limiting means include a controller which limits the prevailing high pressure (p) to the value of the pre-determined pressure characteristic(71).

5. Drive unit according to claim 4, characterised in that when the pre-determined pressure characteristic (71) is exceeded (76, 81), the gear ratio (i) is altered in the sense of a reduction of the output speed of the transmission (15), until the pre-determined pressure characteristic (71) is gone below again.

6. Drive unit according to claim 1, characterised in that the measuring units include a speed indicator (46, 47) and a torque indicator (49) on a shaft transmitting one of the power shares (P_{G}, P_{Z}).

7. Drive unit according to claim 6, characterised in that the shaft is the power take-off shaft (18).

8. Drive unit according to claim 1, characterised in that the measuring units include a power indicator (5) for sensing the reaction moment of the transmission on a stable chassis (56) and means for sensing the gear ratio (i) of the transmission (15).

9. Drive unit according to one or more of claims 6 to 8, characterised in that the limiting means include a power regulator for the drive motor (11).

10. Drive unit according to claim 9, characterised in that the power regulator includes an injection pump (13).

11. Drive unit according to claim 10, characterised in that the injection pump (13) is a diesel injection pump.

12. Use of a drive unit according to one or more of claims 1 to 11 in a utility vehicle, in particular a land or forestry vehicle, a construction machine, a community vehicle or such a utility vehicle with large auxiliary drive power shares.

13. Method for controlling a drive unit with a drive motor (11), a transmission (15) and an auxiliary drive with a power take-off shaft (18), in which the power (P_{A}) of the drive motor (11) is divided into a first share (P_{G}) on the transmission (15) and a second share (P_{Z}) on the power take-off shaft (18), characterised by the method steps:
- sensing of at least one of the power shares (P_{G}, P_{Z}) by means (46. 47. 49. 52.55) for generating a power share signal; and
- limiting of the power share (P_{G}) to a pre-determined limit value dependent upon the power share signal.

14. Method according to claim 13, characterised in that with a transmission (15) configured at least in part as a hydrostatic transmission (28), high pressure (p) in the hydrostatic transmission (28) and the gear ratio (i) of the transmission (15) are measured.

15. Method according to claim 13 or 14, characterised in that with a transmission (15) configured at least in part as a hydrostatic transmission (28), the power share (P_{G}) occurring on the transmission (15) is limited by adjusting the gear ratio (i) of the hydrostatic transmission (28).

16. Method according to claim 15, characterised in that with a transmission (15) configured as a split power, adjustable linkage transmission (15) in which, on passing through any driving range (72, 73), the hydrostatic transmission (28) passes through a pre-determined pressure characteristic (71) of high pressure (p) for a pre-determined, maximum power share (P_{G}) in the transmission, the prevailing high pressure (p) is limited to the value of a pre-determined pressure characteristic (71).

17. Method according to claim 16, characterised in that when the pre-determined pressure characteristic (71) is exceeded (76, 81), the gear ratio (i) is altered in the sense of a reduction in the output speed of the transmission (15), until the pre-determined pressure characteristic (71) is gone below again.

18. Method according to claim 13, characterised in that the speed and the torque are measured on a shaft transmitting one of the power shares (P_{G}, P_{Z}).

19. Method according to claim 18. characterised in that the speed and the torque are measured on the power take-off shaft (18).

20. Method according to claim 13, characterised in that the reaction moment of the transmission (15) is measured on a stable chassis (56) as is the gear ratio (i) of the transmission (15).

21. Method according to one or more of the claims 18 to 20, characterised in that the power share (P_{G}) occurring on the transmission (15) is limited by power regulation of the drive motor (11).

22. Method according to claim 21, characterised in that the drive motor (11) is power regulated by the affecting of an injection pump (13) of the drive motor (11).

## Revendications

1. Unité d'entraînement comprenant un moteur d'entraînement (11), une transmission (15) et une sortie de puissance auxiliaire avec un arbre de prise de force (18), dans laquelle la puissance (P_{A}) du moteur d'entraînement (11) est appliquée pour une première fraction (P_{G}) à la transmission (15) et pour une seconde fraction (P_{Z}) à l'arbre de prise de force (18), caractérisée par le fait qu'il est prévu des unités de mesure (46, 47, 49, 52, 55) pour mesurer au moins une des fractions de puissance (P_{G}, P_{Z}) et produire un signal correspondant de fraction de puissance, ainsi que des moyens (14, 40, 60) pour limiter la fraction de puissance (P_{G}) appliquée à la transmission (15) à une valeur limite prédéterminée en fonction du signal de fraction de puissance.

2. Unité d'entraînement selon la revendication 1, caractérisée par le fait que la transmission (15) est réalisée au moins partiellement sous forme de transmission hydrostatique et par le fait que les unités de mesure comprennent un capteur de pression (52) pour la haute pression (p) à l'intérieur de la transmission hydrostatique (28) ainsi que des moyens pour déterminer le rapport de démultiplication (i) de la transmission (15).

3. Unité d'entraînement selon la revendication 1 ou 2, caractérisée par le fait que la transmission (15) est réalisée au moins partiellement sous forme de transmission hydrostatique et par le fait que les moyens de limitation comprennent un organe de réglage (60) du rapport de démultiplication (i) de la transmission hydrostatique (28).

4. Unité d'entraînement selon la revendication 3, caractérisée par le fait que la transmission (15) est réalisée sous forme de transmission mixte hydraulique - mécanique avec fractionnement de la puissance, dans laquelle la transmission hydrostatique (28), pour chaque plage de fonctionnement (72, 73), pour une fraction de puissance (P_{G}) maximale prédéterminée au niveau de la transmission (15), suit une courbe (71) prédéterminée pour la haute pression (p) et par le fait que les moyens de limitation comprennent une commande qui limite la haute pression (p) concernée à la valeur de la courbe de pression (71) prédéterminée.

5. Unité d'entraînement selon la revendication 4, caractérisée par le fait qu'en cas de dépassement (76, 81) de la courbe de pression (71) prédéterminée, le rapport de démultiplication (i) est modifié dans le sens d'une diminution de la vitesse de rotation à la sortie de la transmission (15) jusqu'à ce que la pression redescende au-dessous (78, 84) de la courbe de pression (71) prédéterminée.

6. Unité d'entraînement selon la revendication 1, caractérisée par le fait que les unités de mesure comprennent un capteur de vitesse (46, 47) ainsi qu'un capteur de couple (49) associé à un arbre transmettant l'une des fractions de puissance (P_{G}, P_{Z}).

7. Unité d'entraînement selon la revendication 6, caractérisée par le fait que l'arbre est l'arbre de prise de force (18).

8. Unité d'entraînement selon la revendication 1, caractérisée par le fait que les unités de mesure comprennent un capteur de force (55) pour mesurer le couple de réaction de la transmission (15) au niveau d'un châssis (56) fixe dans l'espace ainsi que des moyens pour déterminer le rapport de démultiplication (i) de la transmission (15).

9. Unité d'entraînement selon une ou plusieurs des revendications 6 à 8, caractérisée par le fait que les moyens de limitation comprennent un régulateur de la puissance du moteur d'entraînement (11).

10. Unité d'entraînement selon la revendication 9, caractérisée par le fait que le régulateur de puissance comprend une pompe d'injection (13).

11. Unité d'entraînement selon la revendication 10, caractérisée par le fait que la pompe d'injection (13) est une pompe d'injection Diesel.

12. Utilisation d'une unité d'entraînement selon une ou plusieurs des revendications 1 à 1 1 dans un véhicule utilitaire, en particulier dans un véhicule agricole ou sylvicole, dans un engin de chantier, dans un véhicule communal ou dans un véhicule utilitaire autre, présentant des fractions de puissance auxiliaire élevées.

13. Procédé de commande d'une unité d'entraînement comprenant un moteur d'entraînement (11), une transmission (15) et une sortie de puissance auxiliaire avec un arbre de prise de force (18), dans laquelle la puissance (P_{A}) du moteur d'entraînement (11) est appliquée, pour une première fraction (P_{G}), à la transmission (15) et, pour une seconde fraction (P_{Z}), à l'arbre de prise de force (18), caractérisé par les étapes de procédé suivantes :
- mesure d'au moins une des fractions de puissance (P_{G}, P_{Z}) à l'aide de moyens (46, 47, 49, 52, 55) pour générer un signal de fraction de puissance et
- limitation de la fraction de puissance (P_{G}) appliquée à la transmission (15) à une valeur seuil prédéterminée en fonction du signal de fraction de puissance.

14. Procédé selon la revendication 13, caractérisé par le fait que dans une transmission (15) réalisée au moins partiellement sous forme de transmission hydrostatique (28), on mesure la haute pression (p) dans la transmission hydrostatique (28) ainsi que le rapport de démultiplication (i) de la transmission (15).

15. Procédé selon la revendication 13 ou 14, caractérisé par le fait que la fraction de puissance (P_{G}) appliquée à la transmission (15), dans une transmission (15) au moins partiellement réalisée sous forme de transmission hydrostatique (28), est limitée par réglage du rapport de démultiplication (i) de la transmission hydrostatique (28).

16. Procédé selon la revendication 15, caractérisé par le fait que, dans une transmission (15) réalisée sous forme de transmission mixte hydrostatique - mécanique avec fractionnement de la puissance, dans laquelle la transmission hydrostatique (28), pour chaque plage de fonctionnement (72, 73), pour une fraction de puissance (P_{G}) maximale prédéterminée au niveau de la transmission (15), suit une courbe (71) prédéterminée pour la haute pression (p), on limite la haute pression (p) concernée à la valeur de la courbe de pression (71) prédéterminée.

17. Procédé selon la revendication 16, caractérisé par le fait qu'en cas de dépassement (76, 81) de la courbe de pression (71) prédéterminée, on modifie le rapport de démultiplication (i) dans le sens d'une diminution de la vitesse de rotation à la sortie de la transmission (15) jusqu'à ce que la pression retombe au-dessous (78, 84) de la courbe de pression (71) prédéterminée.

18. Procédé selon la revendication 13, caractérisé par le fait que l'on mesure la vitesse de rotation et le couple au niveau de l'un des arbres qui transmettent l'une des fractions de puissance (P_{G}, P_{Z}).

19. Procédé selon la revendication 18, caractérisé par le fait que l'on mesure la vitesse de rotation et le couple au niveau de l'arbre de prise de force (18).

20. Procédé selon la revendication 13, caractérisé par le fait que l'on mesure le couple de réaction de la transmission (15) au niveau d'un châssis (56) fixe dans l'espace ainsi que le rapport de démultiplication (i) de la transmission (15).

21. Procédé selon une ou plusieurs des revendication 18 à 20, caractérisé par le fait qu'on limite la fraction de puissance (P_{G}) associée à la transmission (15) par régulation de la puissance du moteur d'entraînement (11).

22. Procédé selon la revendication 21, caractérisé par le fait que le moteur d'entraînement (11) est régulé en puissance par action sur une pompe d'injection (13) du moteur d'entraînement (11).
